# EUROPEAN PATENT APPLICATION

(11) **EP 2 138 924 A1**
(43) Date of publication of application: **30.12.2009**
(21) Application number: 08011720.3
(22) Date of filing: 27.06.2008
(51) Int. Cl.: G06F 1/18

(54) **Panel opening apparatus of computer system**

(71) Applicant: Silver-Stone Technology Co., Ltd., Zhonghe City T'ai pei County 235 (TW)
(72) Inventor: Huang, Hsin-Sheng, Zhonghe City Taipei County 235 (TW)
(74) Representative: TER MEER - STEINMEISTER & PARTNER GbR

(57) **Abstract**

A panel opening apparatus of a computer system is covered onto the front side of a computer system, and the panel opening apparatus includes a frame (10), a movable panel (30) and a resilient element (40). The frame (10) is fixed to the computer system, and both sides of the frame (10) separately have a slide way (11), and the movable panel (30) is sealed onto an external side of the frame (10) and forms a guide pillar (31) slidably coupled to the corresponding slide way (11), and both ends of the resilient element (40) are connected to the frame(10) and the movable panel (30) respectively.

## Description

### BACKGROUND OF THE INVENTION

### 1. Field of the Invention

The present invention generally relates to a panel opening apparatus, and more particularly to a panel opening apparatus applied in a computer system.

### 2. Description of Prior Art

In general, a computer system installs a data storage device such as an optical disk drive or a floppy disk drive at the front side of the computer system. Data storage devices are installed at the front side of the computer system to facilitate users to store data. When such devices are not in use, dusts or moisture may enter the devices easily due to the exposure of the devices to the outside and shorten their life of use. Therefore, a panel opening apparatus of a traditional computer system is developed to overcome the aforementioned problem.

In a conventional panel opening apparatus of a computer system, the panel opening apparatus includes a frame and an external cover, wherein the frame has protruding members arranged with an interval between each other, and the external cover forms tenons latched with the corresponding protruding members respectively, such that the external cover can be latched and coupled with the frame by sections.

However, the tenons and protruding members are usually made of a plastic material, and thus the tenons and protruding members may be cracked or damaged after they are latched with each other for many times after a long time of use, such that the panel opening apparatus of a computer system cannot be used anymore.

Therefore, manufacturers introduce another conventional panel opening apparatus computer system that includes a frame, an oil-pressure gear set and an external cover, wherein both sides of the frame separately have a slide rail and an oil-pressure gear set fixed to the frame, and the external cover has a slide rail slidably coupled to the corresponding slide way and a gear rack formed on an internal side of the external cover and engaged with the corresponding oil-pressure gear set.

When the panel opening apparatus is used, the external cover is separated from a latch point of the frame, such that the external cover will slide down due to the gravitational force. To prevent external cover from falling down too fast and hitting the bottom of the frame, an oil-pressure gear set is provided for retarding the falling speed of the external cover.

However, the oil-pressure gear set may fail if the oil used in the oil-pressure gear set is leaked after a long time of use, and thus the panel opening apparatus cannot be moved smoothly.

Therefore, it is a subject for manufacturers to develop a panel opening apparatus of a computer system that provides a durable structure without incurring a higher cost.

### SUMMARY OF THE INVENTION

In view of the foregoing shortcomings of the prior art, the inventor of the present invention based on years of experience in the related industry to conduct extensive researches and experiments, and finally developed a panel opening apparatus of a computer system in accordance with the present invention to overcome the shortcomings of the prior art.

It is a primary objective of the present invention to provide a panel opening apparatus of a computer system, so that a slide way on a frame and a guide pillar on a movable panel can slide the movable panel up and down with respect to the frame.

Another objective of the present invention is to provide a panel opening apparatus of a computer system, so that the action of a resilient element can slide the movable panel up and down to provide a more convenient application.

A further objective of the present invention is to provide a panel opening apparatus of a computer system, so that the movable panel can be covered onto the front side of the computer system for aligning a device at the front side of the computer system to achieve the dustproof effect.

To achieve the foregoing objectives, the present invention provides a panel opening apparatus of a computer system, which is covered onto the front side of a computer system, and the panel opening apparatus comprises a frame, a movable panel and a resilient element, wherein the frame is fixed to the computer system, and both sides of the frame separately have a slide way, and the movable panel is sealed onto an external side of the frame, and both sides of the movable panel form a guide pillar slidably connected with the corresponding guide pillar, and both ends of the resilient element are connected to the frame and the movable panel respectively.

### BRIEF DESCRIPTION OF DRAWINGS

Fig. 1 is an exploded view of the present invention;
Fig. 2 is a perspective view of the present invention;
Fig. 3 is a front sectional view of the present invention;
Fig. 4 is a three-dimensional view of the present invention;
Fig. 5 is a side sectional view of the present invention;
Fig. 6 is an enlarged view of a portion A of Fig. 5;
Fig. 7 is a perspective view of an application in accordance with the present invention; and
Fig. 8 is a side sectional view of an application in accordance with the present invention.

### DETAILED DESCRIPTION OF THE INVENTION

The technical characteristics, features and advantages of the present invention will become apparent in the following detailed description of preferred embodiments with reference to the accompanying drawings, and the preferred embodiments are used for illustrating the present invention only, but not intended to limit the scope of the present invention.

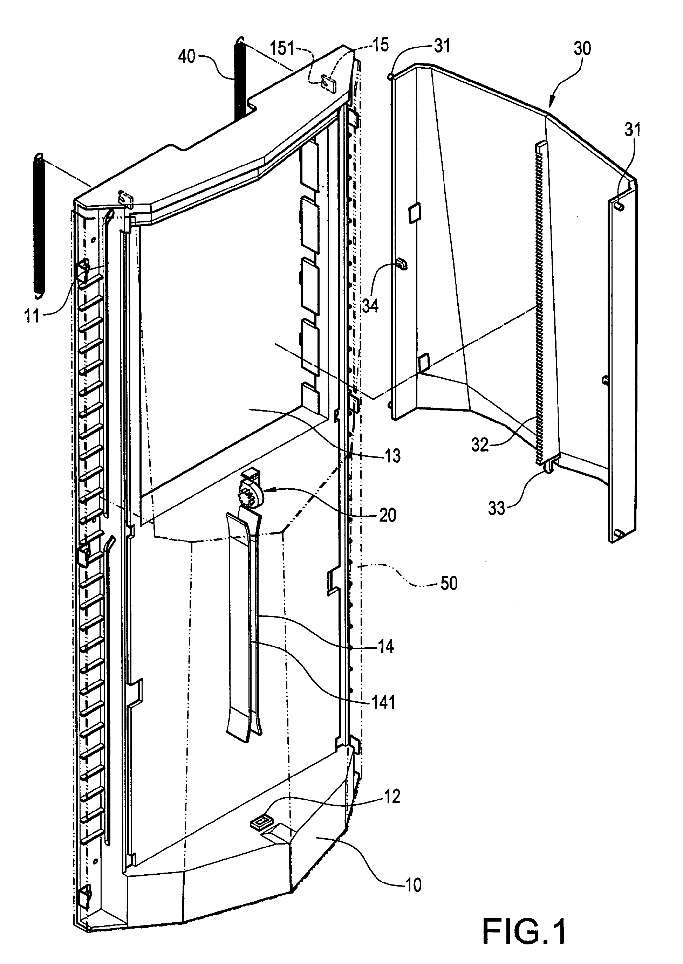

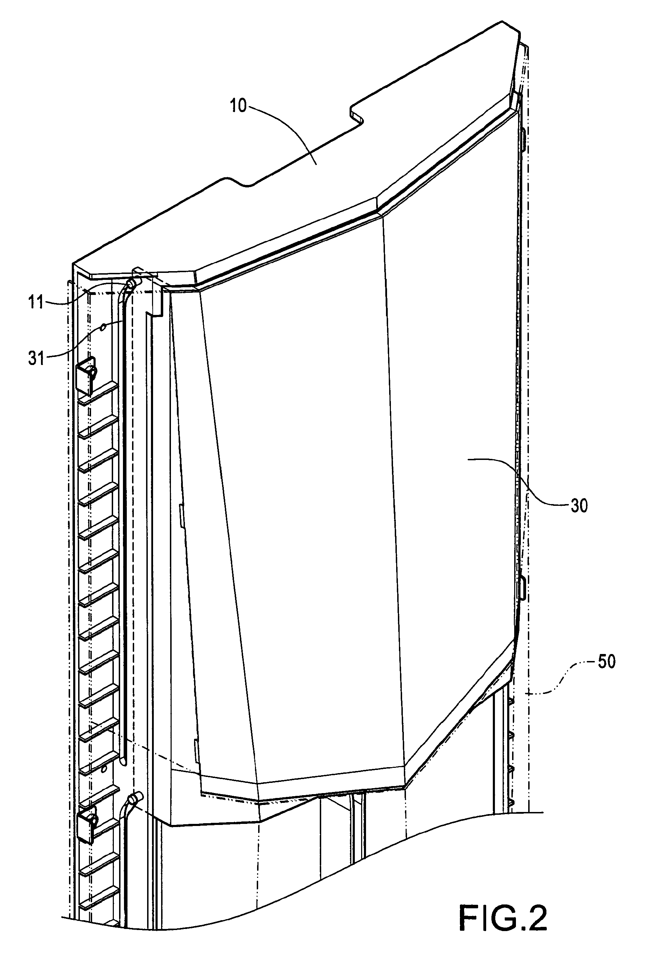

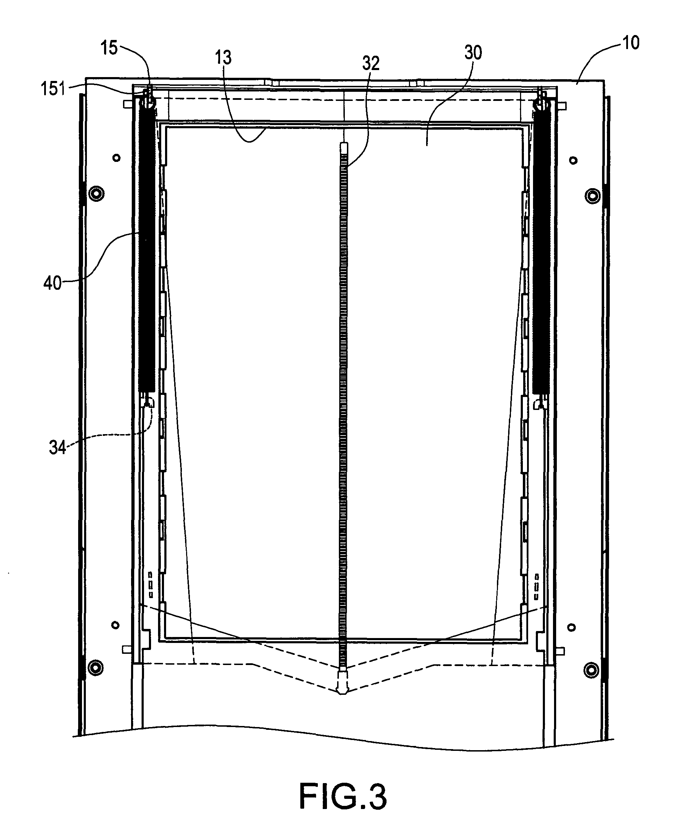

Referring to Figs. 1 to 3 for an exploded view, a perspective view and a front sectional view of a panel opening apparatus being covered onto a front side of a computer system, the panel opening apparatus comprises a frame 10, a reduction gear set 20, a movable panel 30 and a resilient element 40.

The frame 10 is fixed to the computer system (not shown in the figure), and both sides of the frame 10 separately have a slide way 11 and a reduction gear set 20 fixed to the frame 10; and the frame 10 has an opening 13 corresponding to a data access device (such as an optical disk drive, a floppy disk drive and a USB slot) disposed at the front side of the computer system, such that users can use the data access device through the opening 13.

A distal surface of the frame 10 disposed under the reduction gear set 20 further includes two guide plates 14 with an interval between each other, a guide channel 141 formed between the two guide plates 14, and a latch slot 12 disposed at the bottom of the frame 10.

The movable panel 30 is sealed onto an external side of the frame 10, and both sides of the movable panel 30 form a guide pillar 31 slidably coupled with the corresponding slide way 11.

An internal side of the movable panel 30 forms a gear rack 32 engaged with the corresponding reduction gear set 20, and the bottom of the movable panel 30 further forms a latching hook 33 latched to the corresponding latch slot 12.

The top of the frame 10 further forms a protruding member 15, and the protruding member 15 includes a fixing slot 151 and a fixing hook 34 disposed on an internal side of the movable panel 30, and an end of the resilient element 40 is passed and fixed to the fixing slot 151, and another end of the resilient element 40 is latched with the fixing hook 34, wherein the resilient element 40 is an extension spring.

Further, the reduction gear set 20 of the invention is comprised of a plurality of gears, each having a different number of teeth (not shown in the figure), and the gears engaged with the gear rack 32 have a greater torque, so that when the gear rack 32 of the movable panel 30 is moved with respect to the gear, the gear racks 32 can resist the pulling force of the resilient element 40 effectively, such that when the movable panel 30 is moved and slid up and down, the movable panel 30 is limited by the reduction gear set 20 and moved in a slower speed.

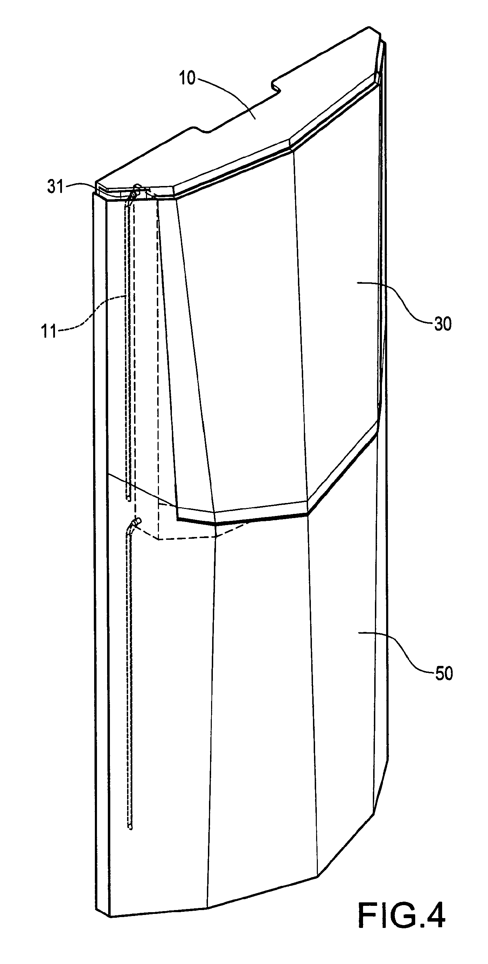

Referring to FIG. 4 for a three-dimensional view of the present invention, the panel opening apparatus of a computer system further comprises an external cover panel 50 sealed to an external side of the frame 10, such that the mechanical structure such as the slide way 11 on the frame 10 is not exposed to give a more aesthetic look.

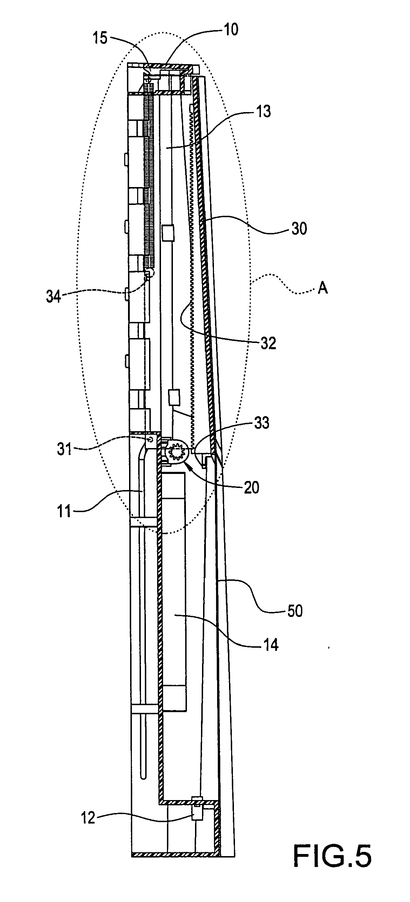

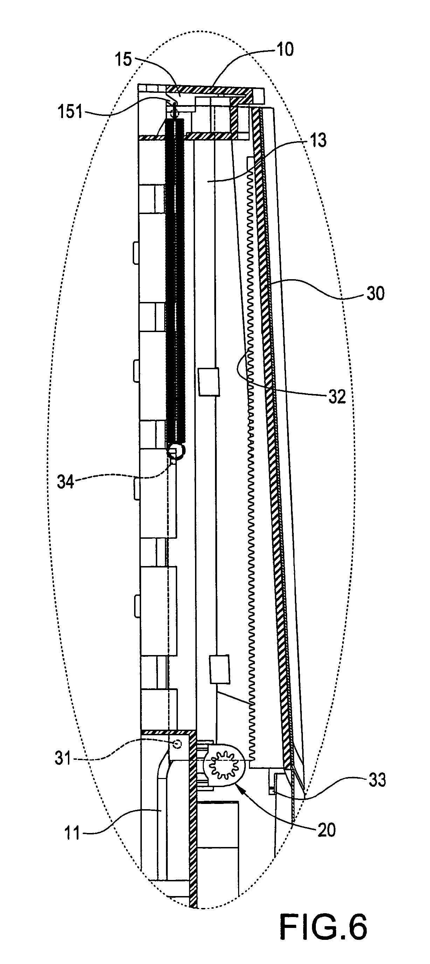

Referring to FIGS. 5 and 6 for a side sectional view of the invention and an enlarged view of a portion of FIG. 5 respectively, if the movable panel 30 situated at the front of the opening 13 is closed, the bottom of the movable panel 30 will be fixed to the external cover panel 50, and the pulling force of the resilient element 40 is provided for fixing the movable panel 30. By then, the gear rack 32 and the reduction gear set 20 are not engaged with each other.

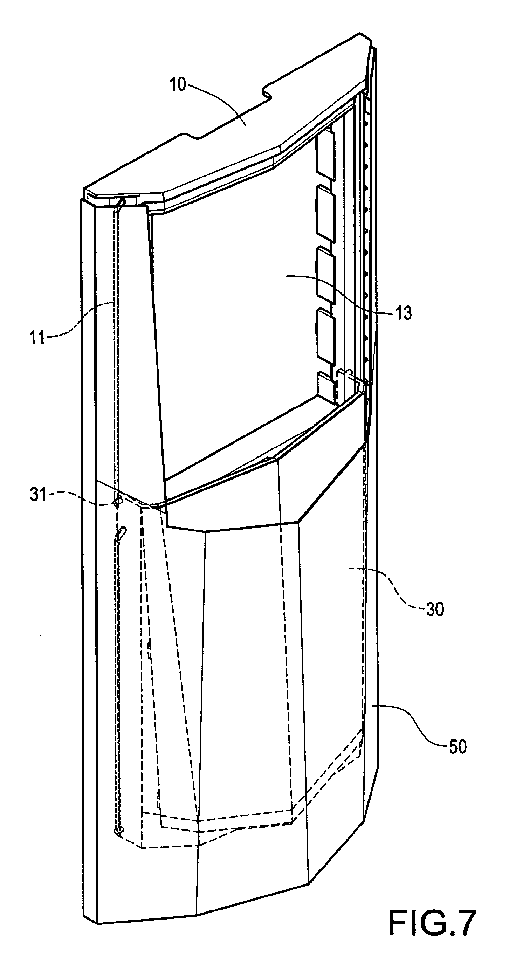

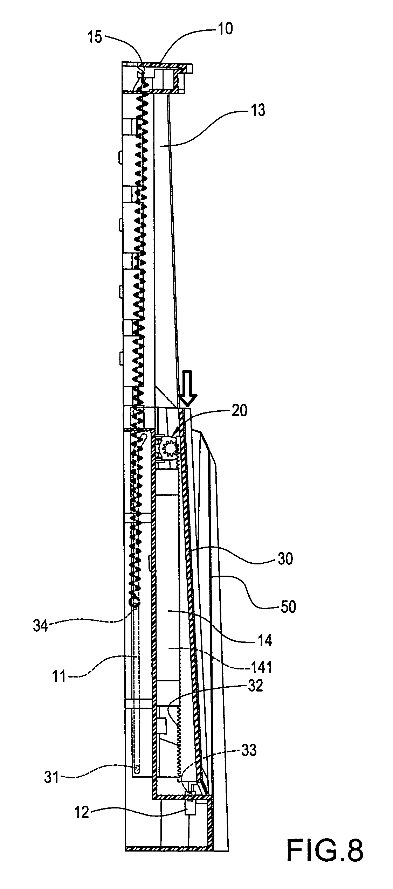

Referring to FIGS. 7 and 8 for a perspective view and a side sectional view of an application in accordance with the present invention, an external force is applied to push the movable panel 30 inward, such that the bottom of the movable panel 30 is separated from the external cover panel 50 and sunken into the external cover panel 50, and thus the reduction gear set 20 and the gear rack 32 are engaged with each other. If the movable panel 30 is moved downward, the gear rack 32 is situated in the guide channel 141 for achieving the positioning effect and sliding the movable panel 30 more smoothly.

Then, an external force is applied to push the movable panel 30 downward, such that when the movable panel 30 is pushed to the bottom, the latching hook 33 is latched with the latch slot 12, and the movable panel 30 is fixed to the rear side of the external cover panel 50, and the opening 13 exposes a data access device (not shown in the figure) at a position corresponding to the opening 13 for using the data access device.

When the latching hook 33 is separated from the latch slot 12, the movable panel is moved upward by the resilience of the resilient element 40, and the action of the reduction gear set 20 and the gear rack 32 retards the rising speed of the movable panel 30, so that the invention can provide a safer application and a durable panel opening apparatus

Therefore, the panel opening apparatus of a computer system in accordance with the present invention has the following advantages:
1. The slide mechanism comprised of the slide way 11 and the guide pillar 31 adopts a sliding or displacement instead of the sectional latch to provide a better durability.
2. With the action of the reduction gear set 20 and the gear rack 32, the speed of opening or closing the movable panel 30 can be retarded to improve the durability and safety of the panel opening apparatus.
3. The panel opening apparatus adopts low-cost components or mechanisms such as the slide way 11, the guide pillar 31, the reduction gear set 20, the gear rack 32 and the resilient element 40 to save the manufacturing cost of the panel opening apparatus effectively.
4. When the movable panel 30 is closed, the data access device of the computer system is protected effectively, so that the dusts and moisture cannot enter into the data access device easily, and the life expectancy of the data access device can be extended.

In summation of the description above, a panel opening apparatus of a computer system in accordance with the present invention, the invention complies with the requirements of patent application, and thus is duly filed for patent application.

## Claims

1. A panel opening apparatus of a computer system, covered onto a front end of the computer system, and the panel opening apparatus comprising:
a frame 10, fixed to the computer system, and having a slide way 11 disposed separately on both sides of the frame 10;
a movable panel 30, sealed on an external side of the frame 10, and forming a guide pillar 31 disposed separately on both sides of the movable panel 30 and slidably coupled with the corresponding slide way 11; and
a resilient element 40, with both ends coupled with the frame 10 and the movable panel 30 respectively.

2. The panel opening apparatus of a computer system as recited in claim 1, further comprising a reduction gear set 20 fixed at the frame 10, a gear rack 32 formed on an internal side of the movable panel 30 and correspondingly engaged with the reduction gear set 20.

3. The panel opening apparatus of a computer system as recited in claim 1, further comprising an external cover panel disposed on an external side of the frame 10.

4. The panel opening apparatus of a computer system as recited in claim 1, wherein the frame 10 includes a latch slot 12 disposed at the bottom of the frame 10, and the movable panel 30 forms a latching hook 33 disposed at the bottom of the movable panel 30 and latched to the corresponding latch slot 12.

5. The panel opening apparatus of a computer system as recited in claim 2, wherein the reduction gear set 20 includes two guide plates 14 separated with each other by an interval and disposed on a distal surface of the frame 10, and a guide channel formed between the two guide plates 14 for accommodating the gear rack 32.

6. The panel opening apparatus of a computer system as recited in claim 1, wherein the frame 10 comprises a protruding member 15 disposed at the top of the frame 10, a fixing slot 151 disposed on the protruding member 15, a fixing hook 34 disposed on an internal side of the movable panel 30, and an end of the resilient element 40 is passed and connected to the fixing slot 151, and another end of the resilient element 40 latched with the fixing hook 34.

7. The panel opening apparatus of a computer system as recited in claim 1, wherein the resilient element 40 is an extension spring.
